# EUROPÄISCHE PATENTSCHRIFT

(11) **EP 3 642 459 B1**
(45) Veröffentlichungstag und Bekanntmachung des Hinweises auf die Patenterteilung: **29.06.2022**
(21) Anmeldenummer: 18728064.9
(22) Anmeldetag: 18.05.2018
(51) Int. Cl.: F01K 13/02, G05B 17/00

(54) **VERFAHREN ZUM BETRIEB EINES KRAFTWERKS**
METHOD FOR OPERATING A POWER PLANT
PROCÉDÉ PERMETTANT DE FAIRE FONCTIONNER UNE CENTRALE ÉLECTRIQUE

(30) Priorität: 23.06.2017 DE 102017113926
(43) Veröffentlichungstag der Anmeldung: 29.04.2020
(73) Patentinhaber: RWE Power AG, 45141 Essen (DE)
(72) Erfinder: RUPPRECHT, Toni, 41460 Neuss (DE); FIELENBACH, Christian, 40883 Ratingen (DE); BRANDT, Jürgen, 52388 Nörvenich (DE)
(74) Vertreter: Keenway Patentanwälte Neumann Heine Taruttis
(86) Internationale Anmeldenummer: PCT/EP2018/063121
(87) Internationale Veröffentlichungsnummer: WO 2018/233961

(56) Entgegenhaltungen:
- EP-A1- 2 910 743
- EP-A1- 3 133 268
- EP-A2- 2 434 127
- WO-A1-2015/086051
- GB-A- 2 481 896

## Beschreibung

Die Erfindung betrifft ein Verfahren zur Regelung eines Kraftwerks zur Erzeugung und Bereitstellung von Energie in Form von verschiedenen Produkten, die ausgewählt sind aus einer Gruppe umfassend Wärme, Kälte, Heißdampf, Heißwasser und elektrischen Strom, wobei das Kraftwerk wenigstens einen Kraftwerksblock mit wenigstens einer Anlage zur thermischen Umwandlung von Primärenergie und wenigstens einen Wasser-Dampf-Kreislauf mit wenigstens einer Turbine und wenigstens einem Generator umfasst.

Die Erfindung betrifft insbesondere die Co-Erzeugung von elektrischer Energie und Wärme bzw. Kälte, insbesondere von Fernwärme in einem Kraftwerk.

Einen großen Anteil an der Deckung des Strombedarfs haben thermische Dampfkraftwerke. Sie wandeln fossile, erneuerbare oder solare Primärenergie in Dampfwärme um, welche dann ausschließlich in Strom umgewandelt wird. Grundsätzlich ist es bekannt, einen Teil des Dampfes oder auch einen Teil der in Kraftwerken anfallenden Abwärme aus dem Kraftwerksprozess auszukoppeln und anderweitig zu verwenden, beispielsweise in Form von Fernwärme. Die aus dem Kraftwerksprozess ausgekoppelte Energie steht allerdings nicht zur Stromerzeugung zur Verfügung.

Thermische Kraftwerke zur Wandlung von fossiler, erneuerbarer oder solarer Primärenergie haben Freiheitsgrade hinsichtlich der Betriebsweise, welche allerdings überwiegend dazu genutzt werden, den Betrieb der Kraftwerke hinsichtlich Primärenergieeinsatz/ Verschleiß/ Verschmutzung/ Ausfallwahrscheinlichkeit zu optimieren. Dabei steht die Regelung der Kraftwerke im Hinblick auf eine optimale Bereitstellung von elektrischem Strom im Vordergrund. Eine solche Fahrweise ist insbesondere durch die Einspeisung von Strom aus volatilen Energiequellen in das Stromversorgungsnetz unter Berücksichtigung von Spitzenlastzeiten, Schwachlastzeiten und unter Berücksichtigung der Bereitstellung von Regelenergie besonders kritisch. Grundsätzlich wäre eine Optimierung eines Kraftwerksprozesses im Hinblick auf eine kombinierte Abgabe von Strom, Dampf, Wärme und Kälte sinnvoll und wünschenswert.

Aus der GB 2 481 896 A ist ein Optimierungssystem für ein Kraftwerk bekannt, mit dem beispielsweise Energiekosten des Kraftwerks reduziert werden können. Ferner ist aus der EP 3 133 268 A1 ein Verfahren zum Betrieb eines Kraftwerks bekannt. Der Erfindung liegt die Aufgabe zugrunde, ein Verfahren zur Regelung eines Kraftwerks zur Erzeugung und Bereitstellung von Energie in Form von verschiedenen Produkten bereitzustellen, mit dem eine weitergehende nachfrageorientierte Optimierung unter Effektivitätsgesichtspunkten und unter Berücksichtigung technischer Randbedingungen möglich ist.

Die Aufgabe wird gelöst mit den Merkmalen des Anspruchs 1. Vorteilhafte Ausgestaltungen der Erfindung ergeben sich aus den Unteransprüchen.

Nach einem Gesichtspunkt der Erfindung wird ein Verfahren zur Regelung des Betriebs eines Kraftwerks zur Erzeugung und Bereitstellung von Energie in Form von verschiedenen Produkten bereitgestellt, die ausgewählt sind aus einer Gruppe umfassend Fernwärme, Heißdampf und elektrischen Strom, wobei das Kraftwerk wenigstens einen Kraftwerksblock mit wenigstens einer Anlage zur thermischen Umwandlung von Primärenergie und wenigstens einem Wasser-Dampf-Kreislauf mit wenigstens einer Turbine und wenigstens einen Generator umfasst, wobei das Verfahren folgende Verfahrensschritte umfasst:
a) Messen und Überwachen von physikalischen Größen wenigstens der Anlage zur thermischen Umwandlung von Primärenergie und des Wasser-Dampf-Kreislaufs,
b) Aufzeichnen der gemessenen physikalischen Größen unter Verwendung einer Einrichtung zur elektronischen Datenverarbeitung,
c) Erstellen wenigstens einer Prognose für den in einem Prognosezeitraum voraussichtlich bereitzustellenden Energiebedarf nach Betrag und Art des bereitzustellenden Produktes,
d) Erstellen einer Prognose einer zeitlich veränderlichen voraussichtlichen maximalen und minimalen Erzeugungsleistung des Kraftwerks unter Berücksichtigung verschiedener möglicher Betriebsweisen für einen vorgegebenen Prognosezeitraum und unter Berücksichtigung der fortlaufend überwachten und/oder aufgezeichneten Größen,
   wobei die Prognose unter Berücksichtigung eines oder mehrerer Parameter erstellt wird, die ausgewählt sind aus einer Gruppe umfassend den Heizwert und/oder den Brennwert des der Verbrennungsanlage zugeführten Brennstoffs, aktuelle und aufgezeichnete meteorologische Daten, meteorologische Vorhersagedaten.
e) Erstellen eines Fahrplans als Regelvorgabe für die Fahrweise des Kraftwerks zwischen Volllast und Teillast und/oder zwischen verschiedenen Betriebsweisen des Kraftwerks innerhalb des Prognosezeitraums unter Zuhilfenahme eines Algorithmus, der die Fahrweise und/oder Betriebsweise des Kraftwerks unter vorgegebenen Randbedingungen als Funktion der Prognosen optimiert, sowie unter Zuhilfenahme der Einrichtung zur elektronischen Datenverarbeitung Z , wobei die Optimierung mit dem Optimierungsziel durchgeführt wird, eine bestmögliche Erfüllung einer gegebenen Lastanforderung nach Art und Menge des bereitzustellenden Produktes in Form von Fernwärme und/oder Fernkälte und/oder Heißdampf und/oder Heißwasser und/oder elektrischem Strom zu erreichen, und
f) Regeln der Fahrweise des Kraftwerks zwischen Volllast und Teillast und/oder Ansteuern verschiedener Betriebsweisen des Kraftwerks und/oder Einstellen des Verhältnisses der bereitgestellten Produkte zueinander nach Regelvorgabe des Fahrplans.

Unter einer Anlage zur Umwandlung von Primärenergie im Sinne der vorliegenden Erfindung ist beispielsweise eine Verbrennungsanlage, eine Biogasanlage oder eine solarthermische Anlage zu verstehen. Unter einer Verbrennungsanlage im Sinne der vorliegenden Erfindung ist beispielsweise ein mit Braunkohle oder mit Steinkohle befeuerter Kessel, eine Anlage umfassend eine oder mehrere Gasturbinen, eine Müllverbrennungsanlage oder dergleichen zu verstehen.

Das mit dem Verfahren zu regelnde Kraftwerk kann beispielsweise ein Kohlekraftwerk oder ein Gas-und Dampfkraftwerk mit einem oder mehreren Blöcken sein. Unter einem Block ist eine an den Wasser-Dampf-Kreislauf des Kraftwerks angeschlossene Gasturbinenanlage oder ein Kernreaktor oder eine solarthermische Anlage oder eine Verbrennungsanlage in Form eines Kessels, beispielsweise eines Kohlekessels zu verstehen. Unter einer Verbrennungsanlage im Sinne der Erfindung ist auch eine Anlage zur Verbrennung von Müll, Biogas oder Erdöl zu verstehen. Unter einem Kessel wird im Allgemeinen und auch im Sinne der vorliegenden Erfindung ein Feuerraum mit Wärmetauscherflächen und/oder Wärmetauschereinbauten verstanden, der entweder mit einem oder mehreren Brennern ausgestattet ist, über welche der Brennstoff innerhalb des Feuerraums thermisch umgesetzt wird, oder mit den heißen Rauchgasen aus einem anderen Prozess, beispielsweise einer Gasturbine, beaufschlagt wird. Der Kessel kann beispielsweise Strahlungsheizflächen und Konvektionsheizflächen aufweisen, über die das Wasser des Wasser-Dampf-Kreislaufs erhitzt wird. Der Dampferzeuger erzeugt beispielsweise Frischdampf, mit dem eine oder mehrere Turbinen gespeist werden. Die Turbinen treiben wiederum einen oder mehrere Generatoren zur Stromerzeugung an.

Der Kessel des Kohlekraftwerks kann als mit Braunkohlestaub befeuerter Kessel ausgebildet sein. Eine oder mehrere Kessel des Kraftwerks können auch für die Verbrennung von Gas, Steinkohle, Biomasse, Klärschlamm, Öl oder dergleichen ausgebildet sein. Ein oder mehrere Kessel können auch für die kombinierte Verbrennung von Braunkohle oder Steinkohle mit Klärschlamm oder Biomasse ausgelegt sein.

Das Verfahren umfasst nach dem Verfahrensschritt a) das Messen aller aktuellen Parameter bzw. physikalischen Größen des Kraftwerks, insbesondere der aktuellen Parameter der Anlage zur thermischen Umwandlung von Primärenergie und des Wasser-Dampf Kreislaufs, und der Aufzeichnung der aktuellen meteorologischen Daten (zum Beispiel die Lufttemperatur und die relative Luftfeuchtigkeit). Die Parameter werden in bekannter Art und Weise in der Leitwarte das Kraftwerks in Echtzeit angezeigt und als historische Daten abgespeichert.

Das Verfahren umfasst gemäß Verfahrensschritt a) insbesondere die Erfassung der intrinsischen Parameter des Kraftwerks, wie beispielsweise den Frischdampfmassenstrom, die Frischdampftemperatur, den Frischdampfdruck, und beispielsweise die Temperatur innerhalb des Feuerraums einer Verbrennungsanlage.

Das Verfahren umfasst gemäß Verfahrensschritt d) das Erstellen wenigstens einer Prognose einer zeitlich veränderlichen voraussichtlichen maximalen und minimalen Erzeugungsleistung des Kraftwerks unter Anderem unter Berücksichtigung einer gewählten Betriebsweise und technischer Grenzen des Kraftwerks, wie zum Beispiel maximal zulässige Temperaturen des Feuerraums einer Verbrennungsanlage, oder maximal zulässige Drücke für die Verrohrung des Wasser-Dampf-Kreislaufs. Die Erzeugungsleistung kann beispielsweise in Abhängigkeit von der Art und Beschaffenheit des bereitgestellten Brennstoffs sowie von den aktuellen Wetterbedingungen und vom Verschmutzungszustand oder Reinigungsbedarf der Verbrennungsanlage variieren.

Der Brennstoff kann beispielsweise hinsichtlich seiner Zusammensetzung variieren. Wenn als Brennstoff Kohle bereitgestellt wird, hängt die Erzeugungsleistung und damit die Feuerungswärmeleistung insbesondere vom Wassergehalt und vom Gehalt der schlackebildenden Bestandteile der Kohle ab. Durch eine der Beschickung mit Brennstoff vorgeschalteten Brennstoffanalyse hinsichtlich Heizwert/Brennwert, Elementarzusammensetzung und Aschegehalt lässt sich auf die zu erwartende Feuerungswärmeleistung schließen.

Die zu erwartende maximale Feuerungswärmeleistung einer Verbrennungsanlage als Anlage zur thermischen Umsetzung von Primärenergie hängt nicht nur vom Brennwert/Heizwert des Brennstoffs ab, sondern auch von dem Anteil der schlackebildenden Bestandteile und der abrasiv wirkenden Bestandteile. Je höher der Anteil dieser Bestandteile ist, umso größer sind der Verschleiß und die Verschmutzung der Verbrennungsanlage. Bei einer hohen Verschmutzung ist die Heizflächeneffektivität bzw. der Wirkungsgrad der Wärmeübertragung von dem Feuerraum auf den Wasser-Dampfkreislauf verhältnismäßig schlecht. Häufige Reinigungsintervalle reduzieren die mögliche Leistung der Verbrennungsanlage, gegebenenfalls ist die Verbrennungsanlage kurzfristig still zu setzen.

Die zu erwartende maximale Feuerungswärmeleistung ist darüber hinaus abhängig von der Art des eingesetzten Brennstoffs. Eine Prognose der zu erwartenden Feuerungswärmeleistung ist beispielsweise bei der Zufeuerung von Biomasse und/oder Klärschlamm oder dergleichen sinnvoll.

Die Daten aus der Brennstoffanalyse werden vorzugsweise beim Erstellen der Prognose nach Verfahrensschritt d) und oder bei der Optimierung verwendet. Bei der Erstellung der Prognose kann beispielsweise die Verfügbarkeit eines bestimmten Brennstoffs eine Rolle spielen.

Bei einer entsprechenden Nachverfolgung der Brennstoffmassenströme wird beispielsweise im Rahmen des Verfahrens gemäß der Erfindung eine Prognose für die zu erwartende Brennstoffqualität erstellt.

Bei der Optimierung können die Kosten für den Brennstoffeinsatz berücksichtigt werden, beispielsweise bei einem Abgleich von Bedarf, Vermögen (Leistungsvermögen des Kraftwerks) und Erlös.

Als minimale Erzeugungsleistung des Kraftwerks wird im Sinne der vorliegenden Erfindung diejenige Erzeugungsleistung angesehen, die technisch minimal erzeugbar ist, ohne Energie in Form von Strom und/oder Wärme und/oder Heißdampf verwerfen zu müssen.

Bei einer besonders bevorzugten Variante des Verfahrens gemäß der Erfindung ist vorgesehen, als minimale Erzeugungsleistung die minimale elektrische Leistung anzusehen, die das Kraftwerk abgeben kann, ohne Energie verwerfen zu müssen.

Erfindungsgemäß ist vorgesehen, jeweils eine Prognose einer zeitlich veränderlichen voraussichtlichen maximalen und minimalen Erzeugungsleistung des Kraftwerks für jede der möglichen Betriebsweisen des Kraftwerks oder der Verbrennungsanlage zu erstellen. Betriebsweisen des Kraftwerks oder einer Verbrennungsanlage im Sinne der vorliegenden Erfindung sind beispielsweise der Betrieb mit oder ohne Speisewasservorwärmung, der Betrieb der elektrisch angetriebenen Speisewasserpumpe oder der mit einer Dampfturbine angetriebenen Speisewasserpumpe, die Menge einer Zwischenüberhitzungs-Einspritzung, die Betriebsweise des Generators (Verhältnis Wirkleistung/Blindleistung).

Nach Verfahrensschritt c) ist das Erstellen einer Prognose für den in einem Prognosezeitraum voraussichtlich von dem Kraftwerk bereitzustellenden Energiebedarf nach Betrag und Art des bereitzustellenden Produktes vorgesehen. Dabei wird erfindungsgemäß insbesondere eine zeitlich veränderliche Nachfragesituation einzelner Produkte wie beispielsweise Strom einerseits und Fernwärme andererseits berücksichtigt. Die Prognose kann beispielsweise aus meteorologischen und kalendarischen Daten abgeleitet werden. Bei einer verhältnismäßig geringen Außentemperatur und/oder zu bestimmten Jahreszeiten ist eine erhöhte Fernwärmenachfrage zu erwarten, zu bestimmten Tageszeiten und an bestimmten Wochentagen ist mit einer erhöhten Stromnachfrage zu rechnen.

Insbesondere wenn eine erhöhte Menge an Fernwärme bereitgestellt werden muss, sollte die Bereitstellung von Fernwärme zur Deckung einer prognostizierten Nachfrage unter Einhaltung bestimmter technischer Randbedingungen erfolgen. Das ist insbesondere sinnvoll und erforderlich, wenn die Fernwärmebereitstellung zulasten der Erzeugung von Strom geht. Beispielsweise erfolgt erfindungsgemäß die Bereitstellung von Fernwärme in Form von Anzapfdampf, der der Turbine vor dem Generator abgezweigt wird.

Nach Verfahrensschritt e) ist die Erstellung eines Fahrplans als Regelvorgabe für die Fahrweise des Kraftwerks zwischen Volllast und Teillast und/oder zwischen verschiedenen Betriebsweisen des Kraftwerks innerhalb des Prognosezeitraums vorgesehen. Der Fahrplan ist das Ergebnis einer Optimierung, die erfindungsgemäß mittels eines, vorzugsweise softwarebasierten,

Algorithmus durchgeführt wird. Dieser Algorithmus optimiert die Fahrweise und/oder Betriebsweise des Kraftwerks unter Anderem, siehe Anspruch 1, unter vorgegebenen Randbedingungen als Funktion der Prognosen. Vorzugsweise wird Verfahrensschritt e) unter Verwendung eines softwarebasierten Optimierers durchgeführt. Als Optimierer kann beispielsweise eine Einrichtung zur elektronischen Datenverarbeitung mit entsprechender Software vorgesehen sein. In dem Optimierer wird ein Fahrplan erstellt, der sowohl die prognostizierte Nachfrage an Fernwärme, Heißdampf und Strom als auch die am Markt zu erzielenden Erlöse unter Berücksichtigung der Erzeugungskosten als auch die technischen Randbedingungen des Kraftwerks unter Berücksichtigung zeitlich veränderlicher maximaler und minimaler Erzeugungsmengen der jeweiligen Produkte in Form von Fernwärme, Heißdampf und Strom berücksichtigt.

Erfindungsgemäß ist die Verwendung eines Algorithmus vorgesehen, der den Einsatz des Kraftwerks hinsichtlich einer bestmöglichen Erfüllung der Nachfragesituation unter Berücksichtigung aller vorgegebenen Randbedingungen optimiert und die erwartete Erzeugungsleistung aller Produkte in Form eines Fahrplans und der hierfür zu wählenden Betriebsweisen ausgibt. Vorzugsweise wird bei der Optimierung der erwartete Verbrauch des Brennstoffs oder sonstiger Edukte, beispielsweise in Form von zu beziehendem Strom oder in Form von Hilfsdampf aus einem anderen Kraftwerksprozess oder einem anderen Kraftwerksblock, berücksichtigt.

Vorzugsweise umfasst die Optimierung die Maximierung einer Erlösfunktion, bei der die Erfüllung der Nachfragesituation positiv und der Einsatz der Edukte, beispielsweise der Einsatz des Brennstoffs, negativ gewichtet wird.

Das Verfahren umfasst weiterhin das Regeln der Fahrweise des Kraftwerks zwischen Volllast und Teillast und/oder die Wahl oder das Einstellen verschiedener Betriebsweisen des Kraftwerks und/oder das Einstellen des Verhältnisses der bereitgestellten Produkte zueinander nach Regelvorgabe des Fahrplans.

Ein besonderes Merkmal des Verfahrens der vorliegenden Erfindung ist die Erstellung der Prognose einer zeitlich veränderlichen voraussichtlich maximalen und minimalen Erzeugungsleistung des Kraftwerks. Dabei werden physikalische Größen des aktuellen und historischen Zustandes der Verbrennungsanlage, beispielsweise Frischdampfmassenstrom, Dampfparameter, Verschmutzungszustand etc. berücksichtigt.

Die Prognose nach Verfahrensschritt d) wird über die im Anspruch 1 genannten Parameter hinausgehend vorzugsweise unter Berücksichtigung eines oder mehrerer weiterer Parameter erstellt, die ausgewählt sind aus einer Gruppe umfassend die aktuellen und aufgezeichneten physikalischen Zustandsgrößen der Anlage zur thermischen Umwandlung von Primärenergie, die tatsächlich erzielbare Feuerungswärmeleistung einer Verbrennungsanlage als Anlage zur thermischen Umwandlung von Primärenergie, die Art und Beschaffenheit des der Verbrennungsanlage zugeführten Brennstoffs, aktuelle und aufgezeichnete Schadstoffemissionen der Verbrennungsanlage, etc.

Dabei werden eine oder mehrere der zeitlich veränderlichen Randbedingungen berücksichtigt, die ausgewählt sind aus einer Gruppe umfassend genehmigungsrechtliche Grenzen (beispielsweise zulässige Emissionswerte), die gewählte Betriebsweise, technische Grenzen der Verbrennungsanlage (beispielsweise maximal zulässige Temperaturen oder Drücke für in dem Kraftwerk verwendete Werkstoffe oder Bauteile) sowie die minimal oder maximal zulässige Erzeugungsleistung eines oder mehrerer Produkte in Form von Fernwärme, Heißdampf und elektrischen Strom.

Bei einer Variante des Verfahrens gemäß der Erfindung ist vorgesehen, dass die Prognose nach Verfahrensschritt c) und d) auf der Basis von physikalischen und/oder datengetriebenen Modellen durchgeführt wird. Diese Modelle werden zweckmäßigerweise mit den nach Verfahrensschritt a) gemessenen aktuellen und/oder denen nach Verfahrensschritt b) aufgezeichneten physikalischen Zustandsdaten einem Rückvergleich (Backtesting) unterzogen und mittels des Rückvergleichs kalibriert und/oder skaliert.

Die Prognose nach dem Verfahrensschritt c) wird zweckmäßigerweise als Prognose des Strom- und/oder Wärmebedarfs in einem Stromnetz und/oder in einem Fernwärmenetz unter Berücksichtigung meteorologischer und kalendarischer Daten erstellt.

Erfindungsgemäß wird der Verfahrensschritt e) mit dem Optimierungsziel durchgeführt, eine bestmögliche Erfüllung einer gegebenen Lastanforderung nach Art und Menge des bereitzustellenden Produktes in Form von Fernwärme und/oder Heißdampf und/oder elektrischem Strom zu erreichen.

Bei dem Verfahren gemäß der Erfindung kann vorgesehen sein, dass die Regelung gemäß Verfahrensschritt f) für mehrere Blöcke des Kraftwerks durchgeführt wird. Das Kraftwerk kann mehrere Blöcke umfassen, die beispielsweise jeweils eine mit fossilen Brennstoffen betriebene Verbrennungsanlage aufweisen können. Dabei kann vorgesehen sein, dass die verschiedenen Blöcke des Kraftwerks mit verschiedenen Brennstoffen befeuert werden.

Bei einer Variante des Verfahrens gemäß der Erfindung, die die Regelung eines Kraftwerks mit mehreren Blöcken/ Kraftwerksblöcken umfasst, kann vorgesehen sein, dass die Regelung eine Verteilung der Lastanforderungen nach Betrag und Art der bereitzustellenden Produkte auf mehrere Blöcke des Kraftwerks umfasst, wobei eine Optimierung der Fahrweise jedes Blocks relativ zu den anderen Blöcken zwischen Volllast und Teillast mit dem Optimierungsziel durchgeführt wird, eine bestmögliche Erfüllung einer gegebenen Lastanforderung nach Art und Menge des bereitzustellenden Produktes in Form von Fernwärme und/oder Heißdampf und oder/elektrischen Strom zu erreichen.

Beispielsweise kann vorgesehen sein, verschiedene Blöcke relativ zueinander hinsichtlich ihrer Fahrweise zwischen Volllast und Teillast zu regeln. Beispielsweise kann vorgesehen sein, dass die Regelung mit dem Ziel erfolgt, eine maximale elektrische Leistung von zwei Blöcken bereitzustellen, bei minimalem Brennstoffeinsatz unter der Randbedingung einer definierten Hilfsdampfbereitstellung, die beliebig auf die beiden Blöcke verteilt werden kann. Unter einer Hilfsdampfbereitstellung ist die Bereitstellung von Heißdampf für einen anderen Prozess des Kraftwerks oder einen kraftwerksexternen technischen Prozess zu verstehen, beispielsweise für eine Trocknung von Brennstoff.

Ziel der erfindungsgemäßen Optimierung für ein Kraftwerk mit mehreren Blöcken kann es beispielsweise sein, die Abgabe einer minimalen elektrischen Leistung bei einer gegebenen abzugebenden Fernwärmeleistung anzustreben, wobei unterschiedliche technische Randbedingungen für die Fernwärmebereitstellung aus den verschiedenen Blöcken und unterschiedliche Einflüsse der Fernwärmebereitstellung auf den Schwachlastpunkt der Blöcke zu berücksichtigen sind.

Unter dem Schwachlastpunkt im Sinne der vorstehenden Ausführungen ist die minimal technisch mögliche Energiebereitstellung des Kraftwerksblocks zu verstehen. Beispielsweise kann der Schwachlastpunkt als ein bestimmter Frischdampfmassenstrom vorgegeben werden, der minimal bereitgestellt werden kann, ohne Energie verwerfen zu müssen. Wenn beispielsweise zwei Kraftwerksblöcke Strom und Fernwärme bereitstellen können, besteht je Block ein funktionaler Zusammenhang zwischen der maximal bereitstellbaren Fernwärmeleistung und der aktuell bereitgestellten elektrischen Leistung. Dieser funktionale Zusammenhang ist je Kraftwerksblock verschieden. Bei einer gegebenen Fernwärmebereitstellung muss jeder Kraftwerksblock mindestens eine bestimmte elektrische Leistung erzeugen, so dass die Fernwärmenachfrage noch gedeckt werden kann. Der betreffende Betriebspunkt wird als Schwachlastpunkt des Kraftwerksblocks bezeichnet.

Vorzugsweise werden als physikalische Größen Parameter gemessen, die ausgewählt sind aus einer Gruppe umfassend die Menge des der Verbrennungsanlage zugeführten Brennstoffmassenstroms, den Heizwert und/oder den Brennwert des der Verbrennungsanlage zugeführten Brennstoffs, die elementare Zusammensetzung des der Verbrennungsanlage zugeführten Brennstoffs, den Frischdampfmassenstrom des Dampferzeugers, den Frischdampfdruck, die Frischdampftemperatur, den Dampfdruck einer Zwischenüberhitzung, die Dampftemperatur einer Zwischenüberhitzung, den Rauchgasvolumenstrom, den NOₓ Anteil des Rauchgasvolumenstroms, den CO Anteil des Rauchgasvolumenstroms und den SOₓ Anteil des Rauchgasvolumenstroms, die elektrische Leistung der Turbine, die Feuerraumtemperatur der Verbrennungsanlage, die Umgebungstemperatur und den aktuell herrschenden atmosphärischen Luftdruck.

Die Temperatur des Frischdampfs wird mittels Widerstandsthermometern gemessen. Die Temperatur im Feuerraum wird mit Pyrometern gemessen. Der Druck des Frischdampfs wird mit Hilfe von Druckmessumformern oder Drucktransmittern gemessen. Der Frischdampfmassenstrom wird beispielsweise mittels bekannter Einrichtungen (Wirkdruckmessung, Stausonde) gemessen. Temperatur und Druck des Dampfs in der Zwischenüberhitzung werden ebenfalls vorzugsweise gemessen. Der Massenstrom des Dampfs der Zwischenüberhitzung wird als Bilanzgröße diverser Massenstrommessungen (z. B. Frischdampfmassenstrom, Entnahmemassenstrom der kalten Zwischenüberhitzung, Einspritzmassenströme in die Zwischenüberhitzung) errechnet.

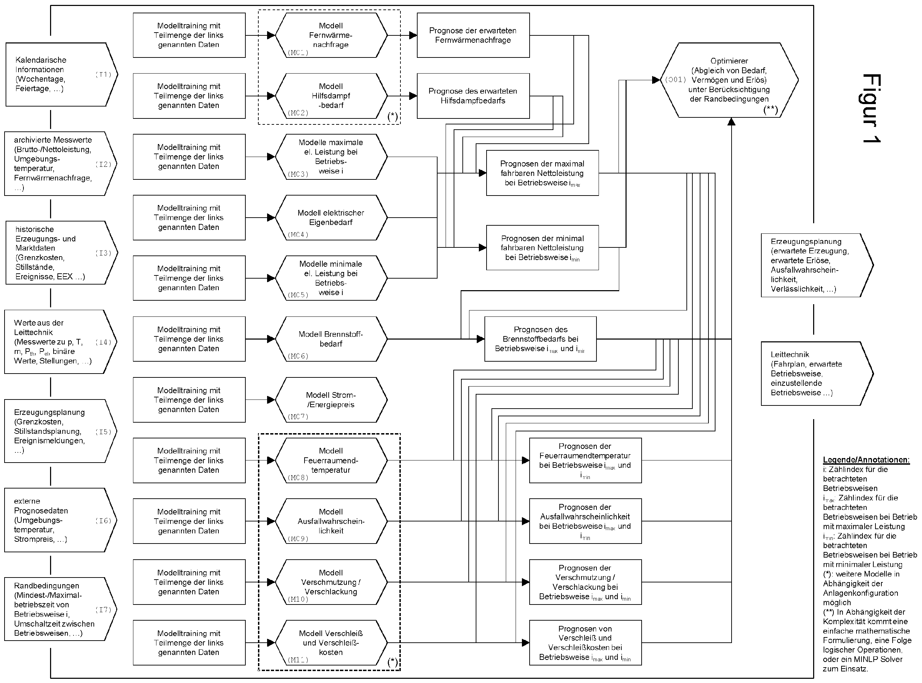

Eine schematische Darstellung einer Regelung eines Kraftwerks gemäß dem erfindungsgemäßen Verfahren ist in Figur 1 dargestellt, wobei das Regelungsschema gemäß Figur 1 das Erstellen wenigstens einer Prognose einer zeitlich veränderlichen voraussichtlichen maximalen Erzeugungsleistung des Kraftwerks und das Erstellen einer Prognose einer zeitlich veränderlichen voraussichtlichen minimalen Erzeugung des Kraftwerks umfasst.

Wie dem Schema gemäß Figur 1 zu entnehmen ist, sind die gemessenen und überwachten physikalischen Größen der Anlage zur thermischen Umwandlung von Primärenergie, beispielsweise einer Verbrennungsanlage des Kraftwerks (Braunkohlenkessel, Steinkohlekessel, Gasturbine, etc.) in Form von Werten aus der Leittechnik des Kraftwerks, kalendarischen Daten, archivierten Messwerte der Anlage, archivierte meteorologische Daten, archivierte Nachfragewerte (historische Daten), historische Erzeugungs-und Marktdaten, externe Prognosedaten und bestimmte Randbedingungen des Kraftwerks, wie beispielsweise Mindest-/Maximal Betriebszeit von bestimmten Betriebsweisen und Umschaltzeiten zwischen bestimmten Betriebsweisen jeweils als Eingangsdaten für bestimmte Rechenmodelle (Algorithmen) vorgesehen. Jedes der Rechenmodelle wird jeweils mit einer Teilmenge der Eingangsdaten gespeist und liefert eine Prognose bzw.

Teilprognose einerseits für die Bereitstellung verschiedener Produkte bzw. für den Bedarf verschiedener Produkte des Kraftwerksprozesses, andererseits für die zeitlich veränderlichen maximalen und/oder minimalen Erzeugungsleistung des Kraftwerks unter Berücksichtigung gegebener Randbedingungen und der Eingangsdaten.

In Figur 1 sind die Eingangsdaten bzw. Eingangsdatenströme mit I01 bis I07 bezeichnet. Der Optimierer ist mit O01 bezeichnet. Die Rechenmodelle sind als M01 bis M11 bezeichnet.

Die nachstehend wiedergegebene Tabelle zeigt eine Zuordnung der Eingangsdaten I01 bis I07 zu den Rechenmodellen M01 bis M11

| | **I01** | **I02** | **I03** | **I04** | **I05** | **I06** | **I07** |
|---|---|---|---|---|---|---|---|
| **M01** | x | x | | x | | x | |
| **M02** | x | x | | x | | x | |
| **M03** | | x | x | x | x | x | x |
| **M04** | | x | | x | | x | |
| **M05** | | x | x | x | x | x | x |
| **M06** | | x | | x | | x | |
| **M07** | x | | x | | x | x | |
| **M08** | | x | | x | | | |
| **M09** | | x | x | x | x | | |
| **M10** | | x | x | x | x | | |
| **M11** | | x | x | x | x | | |
| **O01** | | | | | | | x |

Das in Figur 1 in Form eines Programmablaufplans dargestellte Beispiel bezieht sich auf die Optimierung eines Kraftwerks, welches sowohl elektrische Energie bzw. elektrische Leistung als auch Fernwärme und Hilfsdampf, beispielsweise für die Trocknung von Brennstoff bereitstellt.

Durch Modellierung der Fernwärmenachfrage ergibt sich eine Prognose der zu erwartenden Fernwärmenachfrage. Durch Modellierung des Hilfsdampfbedarfs ergibt sich eine Prognose des zu erwartenden Hilfsdampfbedarfs. Unter Berücksichtigung des elektrischen Eigenbedarfs des Kraftwerks lässt sich sowohl die maximale elektrische Leistung als auch die minimale elektrische Leistung modellieren (in der Darstellung gemäß Figur 1 sind verschiedene Rechenmodelle für verschiedene Betriebsweisen des Kraftwerks vorgesehen).

Aus den zuvor erwähnten Prognosen lässt sich eine Prognose für eine maximal fahrbare Nettoleistung sowie eine minimal fahrbare Nettoleistung, jeweils in Abhängigkeit der gewählten Betriebsweise erstellen.

Aus einem Rechenmodell für den Brennstoffbedarf lässt sich eine Prognose des Brennstoffbedarfs in Abhängigkeit einer gewählten Betriebsweise erstellen. Die Prognose der maximalfahrbare Nettoleistung, die Prognose der minimal fahrbaren Nettoleistung sowie die Prognose des Brennstoffbedarfs werden als Eingangsdaten einem Optimierer zugeführt.

Als weitere Eingangsdaten in den Optimierer werden beispielsweise eine Prognose der Feuerraumtemperatur der Verbrennungsanlage in Abhängigkeit einer gewählten Betriebsweise, eine Prognose der Ausfallwahrscheinlichkeit der Verbrennungsanlage eines Kraftwerksblocks für eine bestimmte Betriebsweise, eine Prognose der Verschmutzung/Verschlackung des Feuerraums sowie eine Prognose von Verschleiß und Verschleißkosten bei einer gegebenen Betriebsweise bereitgestellt. In dem Optimierer erfolgt ein Abgleich von Bedarf (Marktnachfrage), Vermögen (Leistungsvermögen)und Erlös unter Berücksichtigung der technischen Randbedingungen.

Je nach Komplexität der von dem Optimierer zu bearbeitenden Daten, kann dieser eine einfache mathematische Formulierung, eine Folge logischer Operationen oder einen MINLP Solver (Mixed Integer non-linear Programming) umfassen.

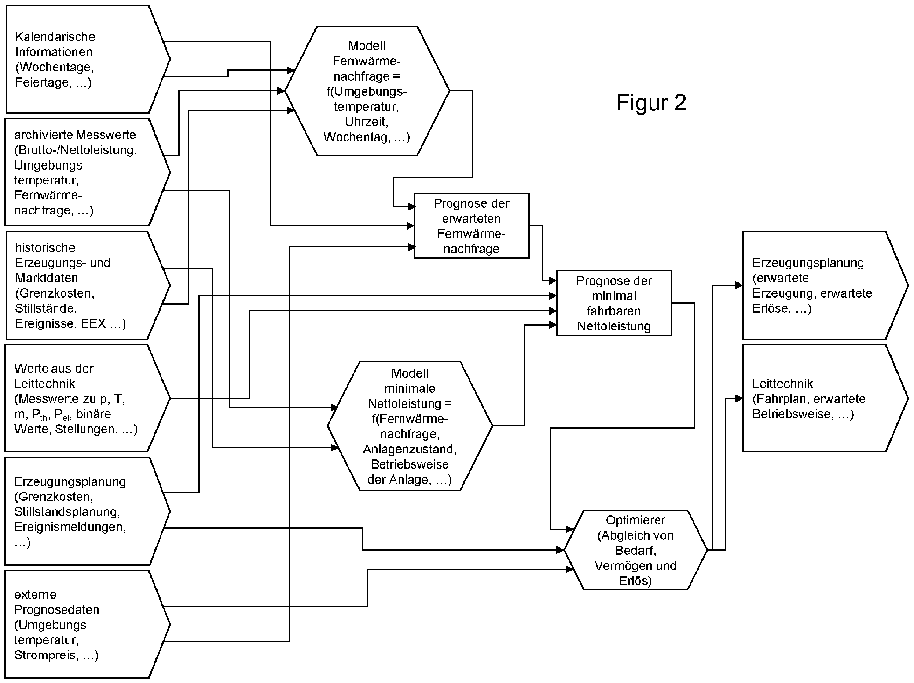

Der in Figur 2 dargestellte Verfahrensablauf zur Regelung eines Kraftwerks, der hilfreich für das Verständnis der Erfindung ist, jedoch nur einen Teilaspekt der Erfindung abbildet und daher nicht Teil der Erfindung ist, bezieht sich auf den Anwendungsfall der Prognose lediglich der minimal fahrbaren Leistung und die Erstellung eines Fahrplans in Abhängigkeit der Prognose einer zeitlich veränderlichen voraussichtlichen minimalen Erzeugungsleistung des Kraftwerks unter Berücksichtigung verschiedener möglicher Betriebsweisen des Kraftwerks. Im Übrigen entspricht aber das Beispiel gemäß Figur 2 einem Teilaspekt desjenigen gemäß Figur 1.

## Patentansprüche

1. Verfahren zur Regelung eines Kraftwerks zur Erzeugung und Bereitstellung von Energie in Form von verschiedenen Produkten, die ausgewählt sind aus einer Gruppe umfassend Wärme, Kälte, Heißdampf, Heißwasser und elektrischem Strom, wobei das Kraftwerk wenigstens einen Kraftwerksblock mit wenigstens einer Anlage zur thermischen Umwandlung von Primärenergie und wenigstens einen Wasser-Dampf-Kreislauf mit wenigstens einer Turbine und wenigstens einen Generator umfasst, wobei das Verfahren folgende Verfahrensschritte umfasst:
a) Messen und Überwachen von physikalischen Größen wenigstens der Anlage zur thermischen Umwandlung von Primärenergie und des Wasser-Dampf-Kreislaufs,
b) Aufzeichnen der gemessenen physikalischen Größen unter Verwendung einer Einrichtung zur elektronischen Datenverarbeitung,
c) Erstellen wenigstens einer Prognose für den in einem Prognosezeitraum voraussichtlich bereitzustellenden Energiebedarf nach Betrag und Art des bereitzustellenden Produkts,
d) Erstellen wenigstens einer Prognose einer zeitlich veränderlichen voraussichtlichen maximalen und minimalen Erzeugungsleistung des Kraftwerks unter Berücksichtigung verschiedener möglicher Betriebsweisen für einen vorgegebenen Prognosezeitraum und unter Berücksichtigung der fortlaufend überwachten und/oder aufgezeichneten Größen,
wobei die Prognose unter Berücksichtigung eines oder mehrerer Parameter erstellt wird, die ausgewählt sind aus einer Gruppe umfassend
- den Heizwert und/oder den Brennwert des der Verbrennungsanlage zugeführten Brennstoffs,
- aktuelle und aufgezeichnete meteorologische Daten,
- meteorologische Vorhersagedaten.
e) Erstellen eines Fahrplans als Regelvorgabe für die Fahrweise des Kraftwerks zwischen Volllast und Teillast und/oder zwischen verschiedenen Betriebsweisen des Kraftwerks innerhalb des Prognosezeitraums unter Zuhilfenahme eines Algorithmus, der die Fahrweise und/oder Betriebsweise des Kraftwerks unter vorgegebenen Randbedingungen als Funktion der Prognosen optimiert, sowie unter Zuhilfenahme der Einrichtung zur elektronischen Datenverarbeitung, wobei die Optimierung mit dem Optimierungsziel durchgeführt wird, eine bestmögliche Erfüllung einer gegebenen Lastanforderung nach Art und Menge des bereitzustellenden Produktes in Form von Fernwärme und/oder Fernkälte und/oder Heißdampf und/oder Heißwasser und/oder elektrischem Strom zu erreichen, und
f) Regeln der Fahrweise des Kraftwerks zwischen Volllast und Teillast und/oder Ansteuern verschiedener Betriebsweisen des Kraftwerks und/oder Einstellen des Verhältnisses der bereitgestellten Produkte zueinander nach Regelvorgabe des Fahrplans.

2. Verfahren nach Anspruch 1, **dadurch gekennzeichnet, dass** Verfahrensschritt e) unter Verwendung eines softwarebasierten Optimierers durchgeführt wird.

3. Verfahren nach einem der Ansprüche 1 oder 2, **dadurch gekennzeichnet, dass** für jede mögliche Betriebsweise des Kraftwerks jeweils eine Prognose gemäß Verfahrensschritt d) erstellt wird, wobei als *Betriebsweisen des Kraftwerks zu verstehen sind: der Betrieb mit oder ohne Speisewasservorwärmung, der Betrieb der elektrisch angetriebenen Speisewasserpumpe oder der mit einer Dampfturbine angetriebenen Speisewasserpumpe, die Menge einer Zwischenüberhitzungs-Einspritzung, die Betriebsweise des* Generators, insbesondere das Verhältnis Wirkleistung/Blindleistung

4. Verfahren nach einem der Ansprüche 1 bis 3 **dadurch gekennzeichnet, dass** die Prognosen nach den Verfahrensschritten c) und d) auf der Basis von physikalischen und/oder datengetriebenen Modellen durchgeführt wird.

5. Verfahren nach Anspruch 4, **dadurch gekennzeichnet, dass** die Modelle mit den nach Verfahrensschritt a) gemessenen aktuellen und/oder den nach Verfahrensschritt b) aufgezeichneten physikalischen Zustandsdaten einem Rückvergleich unterzogen werden und mittels des Rückvergleichs, insbesondere Backtesting, kalibriert und/oder skaliert werden.

6. Verfahren nach einem der Ansprüche 1 bis 5, **dadurch gekennzeichnet, dass** die Prognosen nach Verfahrensschritt c) als Prognosen des Strom- und/oder Wärmebedarfs und/oder Kältebedarfs in einem Stromnetz und/oder in einem Fernwärmenetz und/oder in einem Fernkältenetz unter Berücksichtigung meteorologischer und kalendarischer Daten erstellt werden.

7. Verfahren nach einem der Ansprüche 1 bis 6, **dadurch gekennzeichnet, dass** die Regelung gemäß Verfahrensschritt f) für mehrere Blöcke des Kraftwerks durchgeführt wird.

8. Verfahren nach Anspruch 7, **dadurch gekennzeichnet, dass** die Regelung eine Verteilung der Lastanforderungen nach Betrag und Art der bereitzustellenden Produkte auf mehrere Blöcke des Kraftwerks umfasst, wobei eine Optimierung der Fahrweise jedes Blocks relativ zu den anderen Blöcken zwischen Volllast und Teillast mit dem Optimierungsziel durchgeführt wird, eine bestmögliche Erfüllung einer gegebenen Lastanforderung nach Art und Menge des bereitzustellenden Produktes in Form von Fernwärme und/oder Fernkälte und/oder Heißdampf und/oder Heißwasser und/oder elektrischen Strom zu erreichen.

9. Verfahren nach einem der Ansprüche 1 bis 8, **dadurch gekennzeichnet, dass** physikalische Größen gemessen werden, die ausgewählt sind aus einer Gruppe umfassend den einer Anlage zur thermischen Umsetzung von Primärenergie zugeführten Brennstoffmassenstrom, den Heizwert und/oder den Brennwert des der Verbrennungsanlage zugeführten Brennstoffs, die elementare Zusammensetzung des der Verbrennungsanlage zugeführten Brennstoffs, den Frischdampfmassenstrom des Dampferzeugers, den Frischdampfdruck, die Frischdampftemperatur, den Dampfdruck einer Zwischenüberhitzung, die Dampftemperatur einer Zwischenüberhitzung, einen Rauchgasvolumenstrom, den NOₓ Anteil des Rauchgasvolumenstroms, den CO Anteil des Rauchgasvolumenstroms und den SOₓ Anteil des Rauchgasvolumenstroms, die elektrische Leistung der Turbine, die Feuerraumtemperatur der Verbrennungsanlage, die Umgebungstemperatur und den aktuell herrschenden atmosphärischen Luftdruck.

## Claims

1. Method for controlling a power plant for generating and providing energy in the form of various products selected from a group comprising heating, cooling, superheated steam, hot water and electrical power, wherein the power plant comprises at least one power plant block having at least one system for thermally converting primary energy, at least one water-steam circuit having at least one turbine, and at least one generator, the method comprising the following method steps:
a) measuring and monitoring physical variables of at least the system for thermally converting primary energy and the water-steam circuit,
b) recording the measured physical variables using a device for electronic data processing,
c) establishing at least one prediction of the energy requirement that is expected to be provided in a prediction period according to the amount and type of product to be provided,
d) establishing at least one prediction of a temporally variable expected maximum and minimum generation capacity of the power plant, taking into account various possible operating modes for a specified prediction period and taking into account the continuously monitored and/or recorded variables,
wherein the prediction is established taking into account one or more parameters selected from a group comprising
- the heating value and/or the combustion value of the fuel supplied to the combustion system,
- current and recorded meteorological data,
- meteorological forecast data.
e) establishing a schedule as a control specification for the operation of the power plant between full load and part load and/or between different operating modes of the power plant within the prediction period using an algorithm which optimizes the operation and/or operating mode of the power plant under predetermined boundary conditions as a function of the predictions, and using the device for electronic data processing, wherein the optimization is carried out with the optimization objective of achieving the best possible fulfillment of a given load requirement according to the type and amount of the product to be provided in the form of district heating and/or district cooling and/or superheated steam and/or hot water and/or electrical power, and
f) controlling the operation of the power plant between full load and part load and/or controlling different operating modes of the power plant and/or adjusting the ratio of the products provided relative to one another according to the control specification of the schedule.

2. Method according to claim 1, **characterized in that** method step e) is carried out using a software-based optimizer.

3. Method according to either claim 1 or claim 2, **characterized in that** for each possible operating mode of the power plant, a prediction is established according to method step d), the operating modes of the power plant being understood to be: operation with or without feed-water preheating, operation of the electrically driven feed-water pump or the feed-water pump driven by a steam turbine, the amount of a resuperheating injection, the operating mode of the generator, in particular the ratio of effective power/reactive power.

4. Method according to any of claims 1 to 3, **characterized in that** the predictions according to method steps c) and d) are carried out on the basis of physical and/or data-driven models.

5. Method according to claim 4, **characterized in that** the models are subjected to a back comparison with the current physical state data measured according to method step a) and/or the physical state data recorded according to method step b), and are calibrated and/or scaled by means of the back comparison, in particular back testing.

6. Method according to any of claims 1 to 5, **characterized in that** the predictions according to method step c) are established as predictions of the power requirement and/or heat requirement and/or cooling requirement in a power grid and/or in a district heating network and/or in a district cooling network, taking into account meteorological and calendrical data.

7. Method according to any of claims 1 to 6, **characterized in that** the control according to method step f) is carried out for a plurality of units of the power plant.

8. Method according to claim 7, **characterized in that** the control comprises a distribution of the load requirements, according to the amount and type of the products to be provided, to a plurality of blocks of the power plant, an optimization of the operation of each block relative to the other blocks between full load and part load being carried out with the optimization objective of achieving the best possible fulfillment of a given load requirement according to the type and amount of the product to be provided in the form of district heating and/or district cooling and/or superheated steam and/or hot water and/or electrical power.

9. Method according to any of claims 1 to 8, **characterized in that** physical variables are measured which are selected from a group comprising the fuel mass flow supplied to a system for thermally converting primary energy, the heating value and/or the combustion value of the fuel supplied to the combustion system, the elementary composition of the fuel supplied to the combustion system, the live steam mass flow of the steam generator, the live steam pressure, the live steam temperature, the steam pressure of a resuperheating process, the steam temperature of a resuperheating process, a flue gas volume flow, the NOₓ content of the flue gas volume flow, the CO content of the flue gas volume flow and the SOₓ content of the flue gas volume flow, the electrical power of the turbine, the combustion chamber temperature of the combustion system, the ambient temperature and the currently prevailing atmospheric air pressure.

## Revendications

1. Procédé de réglage d'une centrale pour générer et fournir de l'énergie sous forme de divers produits choisis dans un groupe comprenant la chaleur, le froid, la vapeur chaude, l'eau chaude et l'électricité, la centrale comprenant au moins un bloc de centrale comportant au moins un système de conversion thermique d'énergie primaire et au moins un circuit eau-vapeur comportant au moins une turbine et au moins un générateur, le procédé comprenant les étapes de procédé suivantes :
a) mesure et surveillance de grandeurs physiques au moins du système de conversion thermique d'énergie primaire et du circuit eau-vapeur,
b) enregistrement des grandeurs physiques mesurées à l'aide d'un dispositif de traitement électronique des données,
c) création d'au moins un pronostic du besoin énergétique probable à fournir sur une période de pronostic en fonction de la quantité et du type du produit à fournir,
d) création d'au moins un pronostic d'une capacité de génération maximale et minimale probable variable dans le temps de la centrale, en tenant compte de différents modes de fonctionnement possibles pour une période de pronostic donnée et en tenant compte des grandeurs surveillées et/ou enregistrées en permanence,
dans lequel le pronostic est créé en tenant compte d'un ou de plusieurs paramètres choisis dans un groupe comprenant
- le pouvoir calorifique et/ou le pouvoir de combustion du combustible amené au système de combustion,
- les données météorologiques actuelles et enregistrées,
- les données de prévision météorologique.
e) création d'un plan d'opération en tant que spécification des règles pour le mode d'opération de la centrale entre pleine charge et charge partielle et/ou entre différents modes de fonctionnement de la centrale dans la période de pronostic à l'aide d'un algorithme qui optimise le mode d'opération et/ou le mode de fonctionnement de la centrale sous des conditions de compatibilité déterminées en fonction des pronostics, ainsi qu'à l'aide du dispositif de traitement électronique des données, l'optimisation étant effectuée avec l'objectif d'optimisation d'atteindre la meilleure satisfaction possible d'un besoin de charge donné selon le type et la quantité du produit à fournir sous forme de chauffage urbain et/ou de refroidissement urbain et/ou de vapeur chaude et/ou d'eau chaude et/ou d'électricité, et
f) réglage du mode d'opération de la centrale entre pleine charge et charge partielle et/ou contrôle de différents modes de fonctionnement de la centrale et/ou ajustement du rapport des produits fournis les uns aux autres selon la spécification des règles du plan d'opération.

2. Procédé selon la revendication 1, **caractérisé en ce que** l'étape de procédé e) est effectuée à l'aide d'un optimiseur basé sur un logiciel.

3. Procédé selon l'une des revendications 1 ou 2, **caractérisé en ce que** pour chaque mode de fonctionnement possible de la centrale, respectivement un pronostic selon l'étape de procédé d) est créé, les modes de fonctionnement de la centrale comprenant : le fonctionnement avec ou sans préchauffage d'eau alimentaire, le fonctionnement de la pompe d'eau alimentaire à entraînement électrique ou de la pompe d'eau alimentaire entraînée par une turbine à vapeur, la quantité d'injection à surchauffe intermédiaire, le mode de fonctionnement du générateur, en particulier le rapport puissance active/puissance réactive.

4. Procédé selon l'une des revendications 1 à 3, **caractérisé en ce que** les pronostics selon les étapes de procédé c) et d) sont effectués sur la base de modèles physiques et/ou pilotés par des données.

5. Procédé selon la revendication 4, **caractérisé en ce que** les modèles sont soumis à une comparaison a posteriori avec les données d'état actuelles mesurées selon l'étape de procédé a) et/ou physiques enregistrées selon l'étape de procédé b) et sont calibrés et/ou mis à échelle au moyen de la comparaison a posteriori, en particulier de tests rétrospectifs.

6. Procédé selon l'une des revendications 1 à 5, **caractérisé en ce que** les pronostics selon l'étape de procédé c) sont créés comme des pronostics du besoin en électricité et/ou en chaleur et/ou du besoin de refroidissement dans un réseau électrique et/ou dans un réseau de chauffage urbain et/ou dans un réseau de refroidissement urbain en tenant compte de données météorologiques et calendaires.

7. Procédé selon l'une des revendications 1 à 6, **caractérisé en ce que** le réglage selon l'étape de procédé f) est effectué pour plusieurs blocs de la centrale.

8. Procédé selon la revendication 7, **caractérisé en ce que** le réglage comprend une répartition des besoins de charge selon la quantité et le type des produits à fournir à plusieurs blocs de la centrale, une optimisation du mode d'opération de chaque bloc par rapport aux autres blocs entre pleine charge et charge partielle étant effectuée avec l'objectif d'optimisation d'atteindre la meilleure satisfaction possible d'un besoin de charge donné en fonction du type et de la quantité du produit à fournir sous forme de chauffage urbain et/ou de refroidissement urbain et/ou de vapeur chaude et/ou d'eau chaude et/ou d'électricité.

9. Procédé selon l'une des revendications 1 à 8, **caractérisé en ce que** des grandeurs physiques sont mesurées, lesquelles sont choisies dans un groupe comprenant le débit massique de combustible amené à un système de conversion thermique d'énergie primaire, le pouvoir calorifique et/ou le pouvoir de combustion du combustible amené au système de combustion, la composition élémentaire du combustible amené au système de combustion, le débit massique de vapeur vive du générateur de vapeur, la pression de vapeur vive, la température de vapeur vive, la pression de vapeur d'une surchauffe intermédiaire, la température de vapeur d'une surchauffe intermédiaire, un débit volumique de fumée, la proportion de NOₓ du débit volumique de fumée, la proportion de CO du débit volumique de fumée et la proportion de SOₓ du débit volumique de fumée, la puissance électrique de la turbine, la température de la chambre de combustion du système de combustion, la température ambiante et la pression atmosphérique actuelle.
